Europäisches Patentamt

European Patent Office

Office européen des brevets

(11) Veröffentlichungsnummer: **0 667 591 A2**

## (12) EUROPÄISCHE PATENTANMELDUNG

(21) Anmeldenummer: **94250269.1**

(22) Anmeldetag: **08.11.94**

(51) Int. Cl.6: **G06K 9/80**

(30) Priorität: **10.02.94 DE 4404775**

(43) Veröffentlichungstag der Anmeldung:
**16.08.95 Patentblatt 95/33**

(84) Benannte Vertragsstaaten:
**DE FR GB IT SE**

(71) Anmelder: **Daimler-Benz Aktiengesellschaft**
**Postfach 80 02 30**
**D-70546 Stuttgart (DE)**

(72) Erfinder: **Fechner, Thomas, Dipl.-Ing.**
**Schlüterstrasse 70**
**D-10625 Berlin (DE)**

(74) Vertreter: **Vogl, Leo**
**AEG Aktiengesellschaft,**
**Patent- und Lizenzwesen,**
**Theodor-Stern-Kai 1**
**D-60591 Frankturt (DE)**

(54) **Verfahren zum Betrieb eines hybriden neuronalen Netzwerks zur automatischen Objekterkennung.**

(57) Es wird ein Verfahren zum Betrieb eines der automatischen Erkennung von in Klassen eingeteilten Objekten dienenden hybriden neuronalen Netzwerks angegeben. Bei diesem trennt ein Segmentierer (2) in einem von einer Detektiereinrichtung (1) erfaßten Eingangsbild (E) das Objekt vom Hintergrund. Durch einen Merkmalsextraktor (3) werden aus dem segmentierten Bild (SB) des Objekts klassifikationsrelevante Merkmale (MV) ausgefiltert. Durch die Ausgangssignale (O) eines dem Merkmalsextraktor (3) nachgeschalteten Klassifikators (4) werden aufgrund dieser klassifikationsrelevanten Merkmale (MV) nach ihrer Klassenzugehörigkeitswahrscheinlichkeit geordnete Objektklassen angegeben. Die Segmentierung wird gemäß der Erfindung dadurch verbessert, daß die Ausgangssignale (O) des Klassifikators (4) selektiv beginnend mit der der höchsten Klassenzugehörigkeitswahrscheinlichkeit zugeordneten Objektklasse zur Steuerung des nach dem Clusterungsprinzip arbeitenden Segmentierers (2) rückgeführt werden, bis sich durch die gesteuerte Adaption des Segmentierers (2) ein Optimum bei der Klassenzugehörigkeitswahrscheinlichkeit einstellt. Zusätzlich kann die Adaption des Segmentierers (2) durch ein vom segmentierten Bild (SB) abgeleitetes Homogenitätsmaß beeinflußt werden.

FIG.1

EP 0 667 591 A2

Die Erfindung bezieht sich auf ein Verfahren gemäß dem Oberbegriff des Anspruchs 1. Ein solches Verfahren ist durch den Beitrag von Bir Bhana "Automatic Target Recognition: State of the Art Survey" In: IEEE Transactions of Aerospace and Electronic Systems Vol. AES-22, No. 4, July 1986, pp. 364 to 378 bekannt.

Das Ziel eines solchen Verfahrens ist die robuste Klassifikation von Objekten in Bildern. Die mit verschiedenen Sensoren erzeugten Eingangsbilder (zum Beispiel Radar, Infrarot, Video, Sonar) können unterschiedliche Szenarien beinhalten (zum Beispiel Objekte in der Luft, am Boden, im Wasser). In jedem Fall muß aber davon ausgegangen werden, daß die Objekte mehr oder weniger stark verrauscht erscheinen. Das zuvor genannte bekannte Verfahren zur automatischen Objektklassifikation (im Englischen ATR = Automatic Target Recognition) benutzt eine Reihenschaltung mehrere Funktionsblock-Komponenten: Segmentierer, Merkmalsextraktor und Klassifikator.

Der Segmentierer separiert das im Eingangsbild interessierende Objekt vom Hintergrund.

Zur Segmentierung ist es aus den Proceedings of the IEEE, Vol. 67, No. 5, May 1979 durch die Arbeit von G.B. Coleman und H.C. Andrews "Image Segmentation by Clustering" bekannt, das verfahren der sich selbst organisierenden Clusterung (Haufenbildung) zur Extraktion homogener Bildregionen anzuwenden. Die Bildung von (Sub-)Clustern durch ein Neuronales Netzwerk des Typs "Self-Organizing Feature Map" ist in dem Beitrag von J. Koh, M.Suk und S. Bhandar "A Multi-Layer Kohonen's Self-Organizing Feature Map for Range Segmentation" zur IEEE International Conference on Neural Networks, 1993, pp. 1270 to 1275 angegeben.

Der Merkmalsextraktor bildet aus dem segmentierten Bild sodann geeignete Merkmale. Ein solches Vorgehen ist zum Beispiel dem Buch von A.Niemann "Klassifikation von Mustern", Springer-Verlag, Berlin/Heidelberg/New York/Tokio, 1983, Seiten 79 bis 82 sowie Seite 101 zu entnehmen. Die Merkmale beschreiben in kompakter Form die für die Bildobjekte klassifikationsrelevante Information. Die Gesamtheit der Merkmale bildet einen Merkmalsvektor. Der nachfolgende Klassifikator erzeugt aus den angelegten Merkmalsvektoren Klassenzugehörigkeitswahrscheinlichkeiten. Der Klassifikator basiert entweder auf Modellen über die zu erkennenden Objekte oder verwendet ein statistisches Klassifikationsverfahren (zum Beispiel Polynomklassifikator, Nearest-Neighbour, Multi-Layer-Perceptron...). Bei statistischen Klassifikationsverfahren wird der Klassifikator während einer dedizierten Lernphase anhand von bereits vorab klassifizierten Beispielen trainiert. Nach der Lernphase, im normalen Klassifikationsbetrieb, sind alle Klassifikator-Parameter eingefroren. Das System zur automatischen Objekterkennung ist nun nicht länger adaptiv; es kann nur Situationen beherrschen, die vorab bei der Trainings-Adaption berücksichtigt wurden. In realen Szenerien kann allerdings nicht davon ausgegangen werden, daß die zu erkennenden Objekte stets vollständig und ungestört vorliegen. Die Bildobjekte erscheinen - wie schon erwähnt - hier oftmals verzerrt, teilweise verdeckt und durch Rauschen überlagert.

Die Leistungsfähigkeit des Klassifikators hängt nun entscheidend davon ab, wie gut der Segmentierer ein Objekt aus dem Hintergund zu separieren vermag. Versucht man, den Klassifikator durch Berücksichtigung aller möglichen Bildstörungen beim Training robust zu machen, entstehen untragbar große Trainingsstichproben und lange Trainingszeiten.

Der Erfindung liegt die Aufgabe zugrunde, das eingangs angegebene Verfahren derart auszugestalten, daß die Güte des segmentierten Bildes verbessert wird.

Diese Aufgabe wird gemäß der Erfindung durch die im Anspruch 1 gekennzeichneten Merkmale gelöst.

Die Erfindung begegnet mithin vorteilhaft den Bildstörungen im Eingangsbild mit einer adaptiven von den Klassifikator-Ausgangssignalen gesteuerten Vorverarbeitung. Durch den zusätzlichen Rückkopplungsmechanismus, der die Entscheidung des Klassifikators auf die Stufe des Segmentierers zurückführt, wird die Leistungsfähigkeit des hybriden neuronalen Netzwerks insgesamt angehoben, ohne daß ein überaus intensives Training des Klassifikators notwendig ist.

Vorteilhafte Ausgestaltungen des Verfahrens nach der Erfindung sind in den übrigen Ansprüchen gekennzeichnet.

Die Erfindung soll im folgenden anhand von in der Zeichnung dargestellten Ausführungsbeispielen erläutert werden. Es zeigen:

Fig. 1    ein Prinzipbild eines rückgekoppelten adaptiven Systems zur Objekterkennung nach der Erfindung,

Fig. 2    den prinzipiellen Aufbau einer eindimensionalen Self-Organizing Feature-Map,

Fig. 3    den Ablauf eines Segmentierungsprozesses mit Feature-Map Clustering,

Fig. 4    die prinzipiellen Schritte einer vom Klassifikator gesteuerten Segmentierung,

Fig. 5a,b    die Optimierung der Entscheidung über Klassenzugehörigkeitswahrscheinlichkeiten auf der Basis der maximalen Klassifikationsentscheidung und der Homogenität eines segmentierten Bildes und

Fig. 6    ein Blockbild eines hybriden neuronalen Netzwerks zur Durchführung des Verfahrens nach der Erfindung.

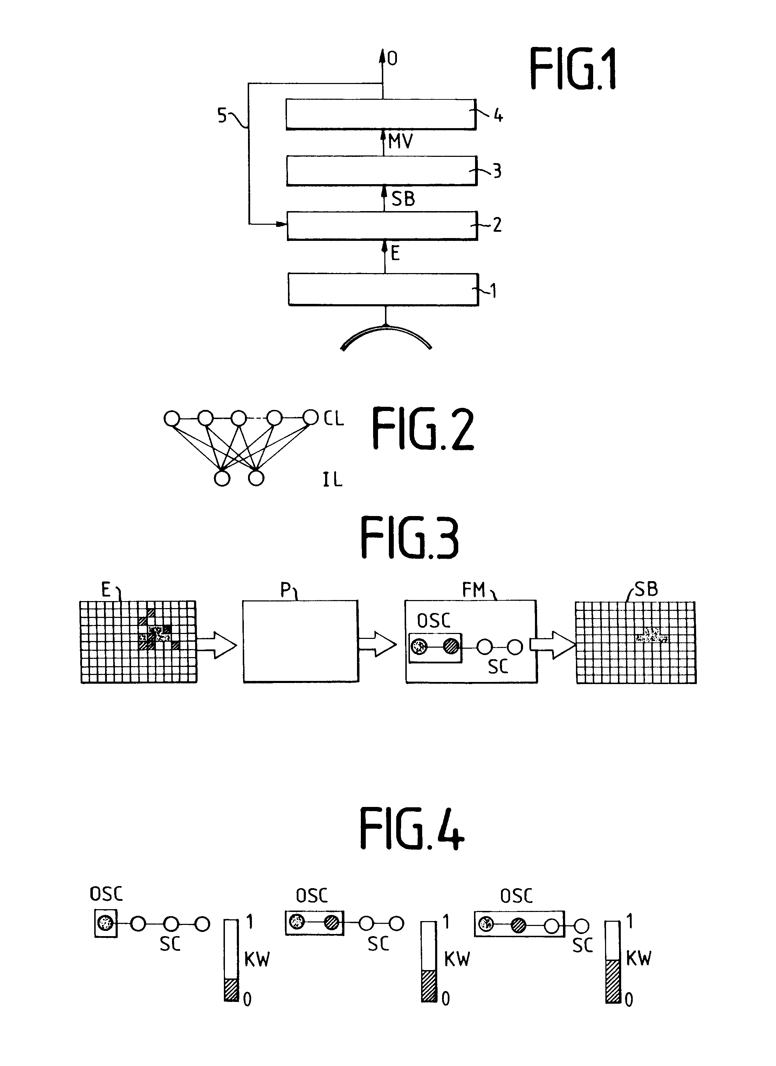

Gemäß Fig. 1 besteht ein hybrides neuronales Netzwerk zur Durchführung des Verfahrens der automatischen Objekterkennung nach der Erfindung ebenso wie das Netzwerk zur Durchführung des eingangs angegebenen, bekannten ATR-Verfahrens (siehe Beitrag von Bir Bhana, a.a.O.) aus hintereinandergeschalteten Funktionsblöcken eines Segmentierers 2, eines Merkmalsextraktors 3 und eines Klassifikators 4. Dabei wird dem Segmentierer 2 von einem Sensor 1 ein (üblicherweise in der Praxis stark verrauschtes) Eingangsbild E zugeführt. Der Segmentierer 2 gibt ein segmentiertes Bild SB an den Merkmalsextraktor 3 ab, der in üblicher Weise die klassifikationsrelevante Information in Form eines Merkmalsvektors MV aus dem Segmentierten Bild SB ausliest. Der Klassifikator 4 gibt in Auswertung der einzelnen Merkmalsvektoren MV Ausgangssignale O ab als Definition von nach Klassenzugehörigkeitswahrscheinlichkeiten geordneten Objektklassen. Die Blöcke Segmentierer 2 und Klassifikator 4 sind als durch einen unüberwachten (unsupervised) bzw. einen überwachten (supervised) Lernprozeß trainierte künstliche neuronale Netze implementiert.

Nach der Erfindung sind zur Verbesserung des segmentierten Bildes SB durch Adaption die Ausgangssignale O des Klassifikators 4 über eine Rückkopplung 5 auf den Segmentierer 2 zurückgeführt.

Vom Sensor 1 wird ein zweidimensionales Intensitäts-Bild E an den Segmentierer 2 geliefert. Die vorrangige Aufgabe des Segmentierers 2 ist - wie zuvor erwähnt - die Separation des Objekts vom Hintergrund. Dabei soll der Segmentierer 2 exakt die Objektbegrenzungen beachten und gleichzeitig fehlende Teile innerhalb des Objects ergänzen. Das hier eingesetzte Segmentierungsverfahren beruht auf der Clusterung. Dazu wird ein neuronales Netzwerk vom Typ Self-Organizing-Feature Map (SOM) eingesetzt. Die SOM besteht wie zum besseren Verständnis in Fig. 2 gezeigt, aus einem Input-Layer IL und einem Competitive-Layer CL. Die Neuronen des Competitive-Layers CL der hier verwendeten SOM sind regulär in einem eindimensionalen Gitter angeordnet. Jedes Neuron des Competitive-Layers CL ist über einen Gewichtsvektor mit dem Input-Layer IL verbunden und repräsentiert damit ein rezeptives Feld oder Cluster im Eingangsraum. Zwischen benachbarten Neuronen bestehen exitatorische Verbindungen, die dazu führen, daß sich die SOM während der Adaption so organisiert, daß benachbarte Neuronen auf ähnliche Eingangsmuster ansprechen.

Zur Clusterung wird für jedes der N Pixel (Bildpunkte) des Eingangsbildes E ein geeigneter Merkmalsvektor erzeugt. Die Komponenten des Merkmalsvektors sind beispielsweise: {Position (karthesisch, radial), Intensität, statistische Eigenschaften, wie Mittelwert Varianz oder Entropie, über k Nachbarpixel}. Die N Merkmalsvektoren des gesamten Bildes werden mittels der SOM als unüberwachter (unsupervised) Lernprozeß geclustert). Ziel der Clusterung ist, die Zuordnung der über ihre Merkmalsvektoren repräsentierten Hintergrund- und Objektpixel zu verschiedenen Clustern. Nur die Pixel, die in ein Objekt-Cluster fallen, durchlaufen unbeeinflußt den Segmentierer 2. Alle anderen Pixel werden als Hintergrundpixel betrachtet und zu Null gesetzt. Dabei wird ausgenutzt, daß die durch die Pixel-Merkmalsvektoren beschriebene Region des interessierenden Objekts, bzw. des Hintergrunds homogene Eigenschaften aufweist.

In Fig. 3 ist der Segmentierungsprozeß verdeutlicht. Ausgehend von einem dem Eingangsbild E entsprechenden Grauwertbild werden die Pixelmerkmale P erfaßt (d.h. die Pixel-Intensität, statistische Eigenschaften der lokalen Pixelumgebung, usw.) und der Feature Map FM zugeführt.

Für das Objekt (bzw. den Hintergrund) werden Supercluster OSC, bestehend auf Subclustern SC, aufgebaut. Die Anzahl der Subcluster SC ist durch die Dimensionierung der Feature Map FM vorgegeben. Unbekannt ist allerdings, welche und wie viele Subcluster SC zu einem Supercluster OSC zusammenzufassen sind. Dazu wird die rückgekoppelte Information aus dem Klassifikator 4 (Fig. 1) ausgenutzt. Beginnend mit zunächst nur einem Subcluster SC werden nach und nach immer mehr Subcluster SC zum Objekt-Supercluster OSC zusammengefaßt, bis die vom Klassifikator angezeigte Klassifikationswahrscheinlichkeit für eine Klasse in den Ausgangssignalen O maximal wird. Wenn dieser Zustand erreicht ist, kann davon ausgegangen werden, daß für die betrachtete Klasse das Objekt optimal als Bild SB segmentiert ist. Bei der sukzessiven Zusammenfassung der Subcluster SC wird die Eigenschaft der SOM ausgenutzt, daß die Cluster topologisch geordnet werden. Das Supercluster OSC, bestehend aus zunächst nur einem Subcluster SC, wird expandiert, indem sukzessive die benachbarten Subcluster SC der SOM vom Supercluster OSC vereinnahmt werden. Dieser Prozeß der adaptiven Segmentierung gesteuert vom Klassifikator ist für drei aufeinanderfolgende Optimierungsschritte in Fig. 4 dargestellt, wobei jeweils die Klassenzugehörigkeitswahrscheinlichkeit KW einer Klasse gezeigt ist. Diese wird durch Vereinnahmung bestimmter Subcluster SC durch den Supercluster OSC deutlich verbessert.

Mit der durch die Rückkopplung 5 (Fig. 1 ) implementierten adaptiven Segmentierung nach der Erfindung soll, wie bereits ausgeführt, primär das Ziel verfolgt werden, die Klassifikationsentscheidung auf der Basis der Klassenzugehörigkeitswahrscheinlichkeiten zu optimieren. Ein grundsätzliches Problem von Optimierungen nichtlinearer Systeme ist jedoch das Steckenbleiben in lokalen Minima. Es hat sich gezeigt, daß es zur Vermeidung lokaler Minima günstig sein kann, zusätzlich zur Klassenzugehörigkeitswahrscheindlichkeit ein Maß für die Homogenität des segmentierten Bildes zur Optimierung des Klassifikationsentscheidung heranzuziehen.

Das unabhängig von der Klassifikationsentscheidung bestimmte Maß für die Bildhomogenität kann beispielsweise durch Bildung der Ableitung (Differenzierung) oder Zählung der Objekt-Hintergrund-Übergänge im segmentierten Bild gewonnen werden, weil homogene Bilder eine geringe Anzahl von Objekt-Hintergrund-Übergängen aufweisen.

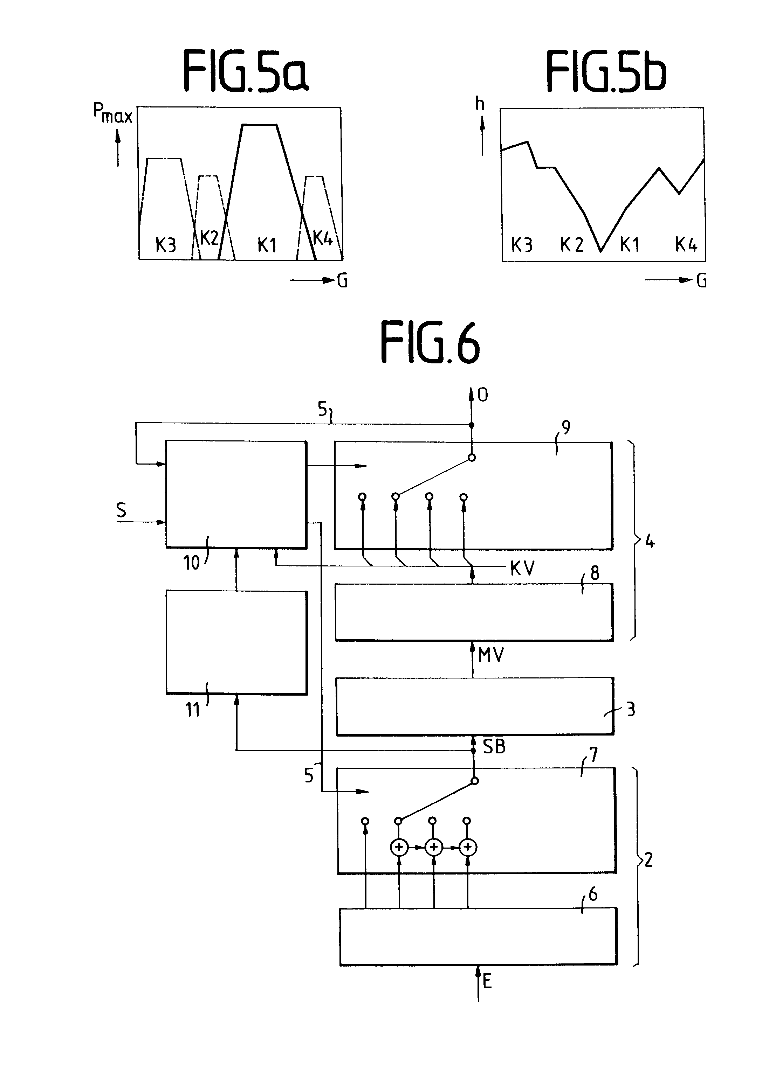

Die Optimierung der Klassifikationsentscheidung auf der Basis von der maximalen Klassenzugehörigkeitswahrscheinlichkeit $p_{max}$ und der Homogenität h des segmentierten Bildes ist in Abhängigkeit von der Größe G des Superclusters jeweils in Fig. 5a und Fig. 5b gezeigt. Die zusätzliche Einbeziehung der Homogenität des segmentierten Bildes in den Klassifikationsprozeß wird nachfolgend zu Fig. 6 noch näher erläutert.

In Fig. 6 ist ein vollständiges Funktionsblockbild des hybriden neuronalen Netzwerks zur Durchführung des Verfahrens nach der Erfindung unter Berücksichtigung des zusätzlichen Einflusses der Homogenität des segmentierten Bildes auf die Klassifikationsentscheidung gezeigt:

Wie zu Fig. 1 bereits erläutert, wird das von einem Sensor gelieferte, zu verarbeitende Eingangsbild E an die Reihenschaltung der Funktionsblöcke Segmentierer 2, Merkmalsextraktor 3 und Klassifizierer 4 gelegt. Zur Verdeutlichung ihrer Funktionsweise sind gegenüber Fig. 1 der Segmentierer 2 in einen Funktionsblock 6 und einen Funktionsblock 7 sowie der Klassifikator 4 in einen Funktionsblock 8 und einen Funktionsblock 9 aufgeteilt.

Der Funktionsblock 6 ist als neuronales Netz vom Typ Self-Organizing-Feature Map (SOM) zur Clusterung von Clustern 1...N ausgebildet. Zur Superclusterbildung ist der mit der Rückführung 5 von einer Steuereinrichtung 10 beaufschlagte, als Cluster-Selektor arbeitende Funktionsblock 7 vorgesehen.

Der Funktionsblock 8 besteht aus einem vorwärtsgerichteten (nicht-rekursiven) neuronalen Netzwerk (Feedforward Neural Network, zum Beispiel Multi-Layer-Perceptron, Radial Basis Network) mit m-Eingängen und k-Ausgängen (für jede der k-Klassen ein Ausgang). Dieses ausgangsseitig den sogenannten Klassifikationsvektor KV liefernde Netzwerk ist vorab in einer Trainingsphase anhand von bereits segmentierten Beispielen überwacht trainiert worden. Dies gilt auch für die SOM des Funktionsblockes 6, deren Subcluster anhand einiger repräsentativer Bilder mit den typischen Störungen ausgebildet werden. Variabel bleibt allerdings das über den Cluster-Selektor des Funktionsblock 7 einzustellende Supercluster. Die Ausgänge des Funktionsblocks 8 werden als Klassenzugehörigkeitswahrscheinlichkeiten interpretiert, und die Summe der Ausgänge wird auf Eins normiert. Ein von der Steuereinrichtung 10 gesteuerter Funktionsblock 9 wählt als Klassenselektor aus den k Klassen eine aus. Zunächst wird diejenige Klasse selektiert, für die der Klassifikator der höchste Wahrscheinlichkeit anzeigt. Die maximale Klassenzugehörigkeitswahrscheinlichkeit $p_{max}$ wird zusammen mit dem unabhängig von der Klassifikationsentscheidung in einem Funktionsblock 11 aus dem segmentierten Bild SB gewonnenen Maß für die Qualität, insbesondere für die zuvor erwähnte Homogenität h, des segmentierten Bildes in der Rückkopplung zur Optimierung des adaptiven Segmentierers 2 verwendet. Dazu wird aus den beiden Größen Klassenzugehörigkeitswahrscheinlichkeit $p_{max}$ und Bildhomogenität h über eine definierte Kostenfunktion ein Kostenwert K bestimmt:

$$K\,(p_{max},\,h)\;=\;p^2_{max}\;+\;a\cdot h^2,$$

wobei a ein Wichtungskoeffizient für die Bildhomogenität h ist. Die Steuereinrichtung 10 vergleicht den Kostenwert K mit einem bestimmten voreingestellten Schwellwert S. Wird der Schwellwert S nach erfolgter Optimierung nicht überschritten, wählt die Steuereinrichtung 10 über den als Klassenselektor wirkenden Funktionsblock 9 die nächstwahrscheinliche Klasse aus und versucht, den Kostenwert K durch Adaption des Segmentierers 2 über die Steuerung des als Cluster-Selektor wirkenden Funktionsblocks 5 zu optimieren. Dieser Vorgang wird solange wiederholt, bis der vorgegebene Schwellwert S für den Kostenwert K überschritten wird.

**Patentansprüche**

1. Verfahren zum Betrieb eines der automatischen Erkennung von in Klassen eingeteilten Objekten dienenden, aus einer Reihenschaltung eines Segmentierers, eines Merkmalsextraktors und eines Klassifikators gebildeten hybriden neuronalen Netzwerks, bei dem durch den Segmentierer in einem von einer Detektiereinrichtung erfaßten Eingangsbild das Objekt vom Hintergrund getrennt wird, durch den Merkmalsextraktor aus dem segmentierten Bild des Objekts klassifikationsrelevante Merkmale ausgefiltert werden und durch die Ausgangssignale des Klassifikators aufgrund dieser klassifikationsrelevanten Merkmale nach ihrer Klassenzugehörigkeitswahrscheinlichkeit geordnete Objektklassen angegeben werden,
**dadurch gekennzeichnet**,
daß die Ausgangssignale des Klassifikators selektiv beginnend mit der der höchsten Klassenzugehörigkeitswahrscheinlichkeit zugeordneten Objektklasse zur Steuerung des Segmentierers rückgeführt werden, bis sich durch die gesteuerte Adaption des Segmentierers ein Optimum bei der Klassenzugehörigkeitswahrscheinlichkeit einstellt.

2. Verfahren nach Anspruch 1,
**dadurch gekennzeichnet**,
daß für die Segmentierung im Segmentierer nach dem Clusterungsprinzip Subcluster gebildet werden, die durch eine nachfolgende Auswahl zu einem variablen Supercluster zusammengesetzt werden.

3. Verfahren nach Anspruch 2,
**dadurch gekennzeichnet**,
daß die Subcluster durch ein unsupervised trainiertes neuronales Netzwerk aus dem in Bildpunkte zerlegten Eingangsbild durch Auswahl von den einzelnen Bildpunkten eigene Merkmalsvektoren gebildet werden.

4. Verfahren nach Anspruch 3,
**dadurch gekennzeichnet**,
daß das unüberwacht (unsupervised) trainierte neuronale Netzwerk gemäß dem Typ der Self-Organizing-Feature Map (SOM) organisiert wird.

5. Verfahren nach einem der Ansprüche 1 bis 4
**dadurch gekennzeichnet**,
daß die Klassifikation durch ein überwacht (supervised) trainiertes nicht-rekursives neuronales Netzwerk (Feedforward Neural Network) vorgenommen wird.

6. Verfahren nach Anspruch 5,
**dadurch gekennzeichnet**,
daß das überwacht trainierte nicht-rekursive neuronale Netzwerk gemäß einem Multi-Layer-Perceptron oder einem Radial Basis Network organisiert wird.

7. Verfahren nach einem der Ansprüche 1 bis 6,
**dadurch gekennzeichnet**,
daß die Adaption des Segmentierers über die Superclusterbildung zusätzlich durch ein vom segmentierten Bild abgeleitetes Homogenitätsmaß gesteuert wird.

8. Verfahren nach Anspruch 7,
**dadurch gekennzeichnet**,
daß das Homogenitätsmaß durch Zählung der Übergänge zwischen Objekt und Hintergrund bei den einzelnen Bildpunkten des segmentierten Bildes gebildet wird.

9. Verfahren nach einem der Ansprüche 7 oder 8,
**dadurch gekennzeichnet**,
daß aus den beiden Größen Klassenzugehörigkeitswahrscheinlichkeit und Bildhomogenität über eine definierte Kostenfunktion ein Kostenwert bestimmt wird, daß dieser Kostenwert mit einem voreingestellten Schwellwert verglichen wird und daß, sofern dieser Schwellwert selbst nach erfolgter Optimierung der Klassenzugehörigkeitswahrscheinlichkeit nicht überschritten wird, die jeweils nächstwahrscheinliche Objektklasse zur Optimierung herangezogen wird.

10. Verfahren nach Anspruch 9,
**dadurch gekennzeichnet**,
daß der Kostenwert nach der Beziehung

$$K\,(p_{max},\, h) = p^2_{max} + a \cdot h^2$$

mit

$p_{max}$ = Klassenzugehörigkeitswahrscheinlichkeit
a = Wichtungskoeffizient
h = Homogenität
bestimmt wird.

# FIG.1

O

5

4

MV

3

SB

2

E

1

# FIG.2

CL

IL

# FIG.3

E

P

FM

OSC

SC

SB

# FIG.4

OSC

SC

1

KW

0

OSC

SC

1

KW

0

OSC

SC

1

KW

0

6

# FIG.5a

# FIG.5b

# FIG.6